# EUROPEAN PATENT SPECIFICATION

(11) **EP 0 579 245 B1**
(45) Date of publication and mention of the grant of the patent: **13.10.1999**
(21) Application number: 93111444.1
(22) Date of filing: 16.07.1993
(51) Int. Cl.: A01N 53/00

(54) **Insecticidal composition**
INSEKTIZIDZUSAMMENSETZUNG
Composition insecticide

(30) Priority: 17.07.1992 JP 19067692; 17.07.1992 JP 19067792
(43) Date of publication of application: 19.01.1994
(60) Divisional application: 98105857.1
(73) Proprietor: SUMITOMO CHEMICAL COMPANY LIMITED, Osaka-shi, Osaka 541-0041 (JP)
(72) Inventor: Tanaka, Yasuyori, Minoo-shi (JP); Matsunaga, Tadahiro, Kobe-shi (JP)
(74) Representative: VOSSIUS & PARTNER

(56) References cited:
- EP-A- 0 279 325
- DE-A- 2 738 878
- GB-A- 2 002 635

## Description

The present invention relates to a novel insecticidal composition, in particular, an insecticidal composition suitable for heating fumigation.

The specification of U.S. Patent No. 4,889,872 describes 2,3,5,6-tetrafluorobenzyl (+)-1R, trans-2,2-dimethyl-3-(2,2-dichlorovinyl)cyclopropanecarboxylate (referred to hereinafter as "benfluthrin") as having insecticidal activity.

However, when benfluthrin is used in the form of an insecticidal composition for heating fumigation, it has been difficult to obtain a stable insecticidal effect for a long period of time.

To avoid this disadvantage of the prior art it has been found according to the present invention that an insecticidal composition comprising benfluthrin and at least one phthalic acid diester having a total number of carbon atoms of 16 to 22 (said composition being referred to hereinafter as "present inventive composition") exhibits a stable effect for a long period of time when applied for heating fumigation.

Therefore, one object of the present invention is to provide a novel insecticidal composition.

Another object of the present invention is to provide an insecticidal composition which exhibits a stable insecticidal effect for a long period of time as an insecticidal composition for heating fumigation.

A further object is to provide a method for controlling pest insects by heating fumigation of the above insecticidal composition.

According to the present invention, there are provided an insecticidal composition comprising 2,3,5,6-tetrafluorobenzyl (+)-1R, trans-2,2-dimethyl-3-(2,2-dichlorovinyl)cyclopropanecarboxylate as insecticidally active ingredient, and at least one phthalic acid diester having a total number of carbon atoms of 16 to 22;
an insecticidal composition for heating fumigation comprising 2,3,5,6-tetrafluorobenzyl (+)-1R, trans-2,2-dimethyl-3-(2,2-dichlorovinyl)cyclopropanecarboxylate, a phthalic acid diester having a total number of carbon atoms of 16 to 22, and a fibrous carrier, being 2,3,5,6-tetrafluorobenzyl (+)-1R, trans-2,2-dimethyl-3-(2,2-dichlorovinyl)cyclopropanecarboxylate and the phthalic acid diester supported on the fibrous carrier;

The phthalic acid diester having a total number of carbon atoms of 16 to 22 used in the present invention is a phthalic acid (having 8 carbon atoms) diester in which the total number of carbon atoms of the alcohol portion is 8 to 14. Specific examples of the phthalic acid diester are alkyl esters and benzyl esters of phthalic acid, such as dibutyl phthalate, diisobutyl phthalate, dipentyl phthalate or benzylbutyl phthalate.

Usually, the mixing ratio of benfluthrin to the aforesaid phthalic acid diester is approximately 1 : 2 to 1 : 50 by weight, preferably approximately 1 : 4 to 1 : 25 by weight.

The present inventive composition can be used in the form of a composition suitable for heating fumigation. Such a composition suitable for heating fumigation can be obtained by supporting, on a fibrous carrier, either a combination of benfluthrin and the above-mentioned ester, or a mixture of benfluthrin, the above-mentioned ester and, optionally, a diluent, synergist, stabilizer, dyestuff, perfume, other insecticidally active ingredients, etc., by impregnation or the like. As the fibrous carrier used, there can be exemplified fibrous carriers consisting of one of or a combination of cellulose (e.g. paper and pulp), vegetable fiber (e.g. cotton), animal fiber (e.g. wool), glass fiber and synthetic fiber. For example, a fibrous carrier with a thickness of 1 to 4 mm, preferably 1.5 to 3 mm is used by supporting thereon benfluthrin and the above-mentioned ester in total amounts of 0.6 - 4.0 mg/cm² and 5 - 30 mg/cm², respectively, by impregnation or the like.

For example, when the above-mentioned ester has too high a viscosity and is difficult to handle as it is, a solvent such as paraffin may be added if necessary.

The present inventive composition obtained in the manner described above is suitable for heating fumigation. For example, it is suitable for application by vaporization of the insecticidal ingredient by means of an electric fumigator capable of heating said composition to 130 - 170°C.

The present inventive composition is effective against the various pest insects controllable by the use of benfluthrin which are described in the specification of U.S. Patent No. 4,889,872. It is effective particularly in controlling pest insects such as flies, mosquitoes, etc. by heating fumigation.

The present invention is concretely illustrated by the following formulation examples, referential examples and test examples.

### Formulation Example 1

With 10 mg of benfluthrin was mixed 140 mg of dibutyl phthalate, and 50 mg of IP Solvent 2028 (composed mainly of isoparaffin, mfd. by Idemitsu Petrochemical Co.) was added to the resulting mixture to obtain a solution. A 22 mm × 35 mm × 2.8 mm fibrous plate (800 mg) composed of pulp and cotton was impregnated with said solution to obtain present inventive composition (1).

### Formulation Example 2

Present inventive composition (2) was obtained in exactly the same manner as in Formulation Example 1, except that the amounts of benfluthrin and dibutyl phthalate were changed to 20 mg and 130 mg, respectively.

### Formulation Example 3

Present inventive composition (3) was obtained in exactly the same manner as in Formulation Example 1, except that the amounts of benfluthrin and dibutyl phthalate were changed to 30 mg and 120 mg, respectively.

### Formulation Example 4

Present inventive composition (4) was obtained in exactly the same manner as in Formulation Example 1, except that 140 mg of diamyl phthalate was used in place of 140 mg of dibutyl phthalate.

### Formulation Example 5

Present inventive composition (5) was obtained in exactly the same manner as in Formulation Example 1, except that 140 mg of benzylbutyl phthalate was used in place of 140 mg of dibutyl phthalate.

### Referential Example 1

To 10 mg of benfluthrin was added 190 mg of IP Solvent 2028 to obtain a solution. A 22 mm × 35 mm × 2.8 mm fibrous plate (800 mg) composed of pulp and cotton was impregnated with said solution to obtain reference composition (1).

### Referential Example 2

Reference composition (2) was obtained in exactly the same manner as in Referential Example 1, except that the amounts of benfluthrin and IP Solvent 2028 were changed to 20 mg and 180 mg, respectively.

### Referential Example 3

Reference composition (3) was obtained in exactly the same manner as in Referential Example 1, except that the amounts of benfluthrin and IP Solvent 2028 were changed to 30 mg and 170 mg, respectively.

### Referential Example 4

Reference composition (4) was obtained in exactly the same manner as in Formulation Example 1, except that 140 mg of diisopropyl phthalate was used in place of 140 mg of dibutyl phthalate.

### Referential Example 5

Reference composition (5) was obtained in exactly the same manner as in Formulation Example 1, except that 140 mg of dinonyl phthalate was used in place of 140 mg of dibutyl phthalate.

### Referential Example 6

Reference composition (6) was obtained in exactly the same manner as in Formulation Example 1, except that 140 mg of diisodecyl phthalate was used in place of 140 mg of dibutyl phthalate.

### Referential Example 7

Reference composition (7) was obtained in exactly the same manner as in Formulation Example 1, except that 140 mg of diethyl sebacate was used in place of 140 mg of dibutyl phthalate.

### Referential Example 8

Reference composition (8) was obtained in exactly the same manner as in Formulation Example 1, except that 140 mg of butyl laurate was used in place of 140 mg of dibutyl phthalate.

### Referential Example 9

Reference composition (9) was obtained in exactly the same manner as in Formulation Example 1, except that 140 mg of isopropyl myristate was used in place of 140 mg of dibutyl phthalate.

### Test Example 1

Each composition to be tested was set on an electric fumigator capable of heating the composition to 160 - 170°C, and the electric fumigator was covered with a glass funnel. One end of a column for sampling which had been packed with 5.0 g of silica gel and closed with absorbent wadding plugs in the upper and lower parts was connected to the funnel, and the other end of the column was connected to a suction pump. Simultaneously with the start of electric current supply to the electric fumigator, suction was initiated so as to adjust the air suction rate to 2.0 liters/min, by use of the suction pump.

At definite times after the start of the electric current supply to the electric fumigator, vapor adsorbed on the silica gel and vapor adhering to the inner walls of the column and the funnel were eluted with acetone and then washed with acetone, whereby benfluthrin as active ingredient was collected. The amount of benfluthrin vaporized was measured by a gas chromatography.

Table 1 shows the vaporization rates of benfluthrin from 0 to 4 hours and from 4 to 8 hours after the start of the electric current supply, and the amount of benfluthrin remaining in each insecticidal composition 8 hours after the start of electric current supply.

**Table 1**

| | | Time elapsed, after supplying electric current and vaporization rate (mg/hr) | | Residual amount in a composition (mg) |
|---|---|---|---|---|
| | | 0-4 hrs | 4-8 hrs | |
| Present inventive composition | (1) | 0.8 | 0.7 | 3.2 |
| | (2) | 2.0 | 1.2 | 4.4 |
| | (3) | 2.6 | 1.7 | 6.8 |
| Reference composition | (1) | 2.3 | 0 | 0 |
| | (2) | 4.3 | 0.1 | 0 |
| | (3) | 7.1 | 0.4 | 0 |
| | (7) | 1.8 | 0.3 | 0 |
| | (8) | 2.2 | 0.1 | 0 |
| | (9) | 2.4 | 0.2 | 0 |

It can be speculated that the present inventive compositions containing a specified ester act effectively for a relatively long period of time because the vaporization rate of benfluthrin is reduced as shown in Table 1. On the other hand, reference compositions (1), (2) and (3) containing no ester and reference compositions (7), (8) and (9) containing a fatty acid ester having a total number of carbon atoms of 14, 16 or 17, respectively, are hardly able to maintain a constant insecticidal effect for a long period of time because a large portion of benfluthrin as active ingredient is vaporized in the early stages.

### Test Example 2

Using the same apparatus as in Test Example 1, the amount of benfluthrin vaporized was measured from 2 to 4 hours and from 6 to 8 hours after the start of the electric current supply in the same manner as in Test Example 1. Table 2 shows the thus measured vaporization rates of benfluthrin, and the amount of benfluthrin remaining in each insecticidal composition 8 hours after the start of the electric current supply.

**Table 2**

| | | Time elapsed, after supplying electric current and vaporization rate (mg/hr) | | Residual amount in a composition (mg) |
|---|---|---|---|---|
| | | 2-4 hrs | 6-8 hrs | |
| Present inventive composition | (4) | 0.8 | 0.6 | 3.2 |
| | (5) | 0.9 | 0.8 | 2.6 |
| Reference composition | (4) | 2.5 | 0.3 | 0 |
| | (5) | 1.2 | 0.3 | 1.3 |
| | (6) | 1.4 | 0.4 | 1.1 |

It can be speculated that the present inventive compositions containing a specified phthalic acid diester act effectively for a relatively long period of time because the vaporization rate of benfluthrin is reduced as shown in Table 2. On the other hand, reference compositions (4), (5) and (6) containing a phthalic acid diester having a total number of carbon atoms of 14, 26 or 28, respectively, are hardly able to maintain a constant insecticidal effect for a long period of time because a large portion of benfluthrin as active ingredient is vaporized in the early stages.

### Test Example 3

An electric fumigator was placed in the center of a 4.3 m × 2.65 m × 2.45 m test chamber (28 m³), and present inventive composition (2) was put on the heating surface of the electric fumigator. Two hours after the start of electric current supply, a nylon cage (diameter 30 cm, height 20 cm) was suspended at a height of 60 cm above the floor in each corner of the test chamber, and 20 female adult mosquitoes (Culex pipiens pallens) were released in each chamber, namely, 80 insects in total were released. The insects were observed for 60 minutes and the knocked-down insects were counted at predetermined intervals. The same procedure as above was carried out also 4, 6 and 8 hours after the start of the electric current supply. KT₅₀ value (a time required for 50% of mosquitoes to be knocked down) was calculated by the Bliss' probit analysis method. KT₅₀ value (min.) was calculated also for reference composition (2). The results obtained are shown in Table 3.

**Table 3**

| Time elapsed, after supplying electric current (hrs) | | 2 | 4 | 6 | 8 |
|---|---|---|---|---|---|
| Present inventive composition | (2) | 19.56 | 21.57 | 26.66 | 29.78 |
| Reference composition | (2) | 11.49 | 43.94 | > 60 | > 60 |

As shown in the above test examples, the present inventive compositions exhibit a stable insecticidal effect for a long period of time and are suitable particularly for heating fumigation.

## Claims

1. An insecticidal composition comprising 2,3,5,6-tetrafluorobensyl (+)-1R, trans-2,2-dimethyl-3-(2,2-dichlorovinyl)cyclopropanecarboxylate as insecticidally active ingredient, and at least one phthalic acid diester having a total number of carbon atoms of 16 to 22.

2. An insecticidal composition according to Claim 1 comprising 2,3,5,6-tetrafluorobenzyl (+)-1R, trans-2,2-dimethyl-3-(2,2-dichlorovinyl)cyclopropanecarboxylate, a phthalic acid diester having a total number of carbon atoms of 16 to 22, and a fibrous carrier, being 2,3,5,6-tetrafluorobenzyl (+)-1R, trans-2,2-dimethyl-3-(2,2-dichlorovinyl)cyclopropanecarboxylate and the phthalic acid diester supported on the fibrous carrier.

3. The insecticidal composition according to Claim 2, wherein the thickness of said fibrous carrier is 1 to 4 mm, 2,3,5,6-tetrafluorobenzyl (+)-1R, trans-2,2-dimethyl-3-(2,2-dichlorovinyl)cyclopropanecarboxylate is supported on said fibrous carrier in an amount of 0.6 to 4.0 mg per cm² of said fibrous carrier, and the phthalic acid diester having a total number of carbon atoms of 16 to 22 is supported on said fibrous carrier in an amount of 5 to 30 mg per cm² of said fibrous carrier.

4. A method for controlling pest insects by heating fumigation of the insecticidal composition of any one of Claims 1 to 3.

## Patentansprüche

1. Insektizides Mittel, umfassend 2,3,5,6-Tetrafluorbenzyl-(+)-1R,trans-2,2-dimethyl-3-(2,2-dichlorvinyl)cyclopropancarboxylat als insektiziden Wirkstoff und mindestens einen Phthalsäurediester mit einer Gesamtzahl von 16 bis 22 Kohlenstoffatomen.

2. Insektizides Mittel nach Anspruch 1, umfassend 2,3,5,6-Tetrafluorbenzyl-(+)-1R,trans-2,2-dimethyl-3-(2,2-dichlorvinyl)cyclopropancarboxylat, einen Phthalsäurediester mit einer Gesamtzahl von 16 bis 22 Kohlenstoffatomen, und einen faserförmigen Träger, wobei 2,3,5,6-Tetrafluorberizyl-(+)-1R,trans-2,2-dimethyl-3-(2,2-dichlorvinyl)cyclopropancarboxylat und der Phthalsäurediester auf den faserförmigen Träger aufgetragen sind.

3. Insektizides Mittel nach Anspruch 2, wobei die Dicke des faserförmigen Trägers 1 bis 4 mm beträgt, 2,3,5,6-Tetrafluorbenzyl-(+)-1R,trans-2,2-dimethyl-3-(2,2-dichlorvinyl)cyclopropancarboxylat auf den faserförmigen Träger in einer Menge von 0.6 bis 4.0 mg pro cm² des faserförmigen Trägers aufgebracht ist und der Phthalsäurediester mit einer Gesamtzahl von 16 bis 22 Kohlenstoffatomen auf den faserförmigen Träger in einer Menge von 5 bis 30 mg pro cm² des faserförmigen Trägers aufgebracht ist.

4. Verfahren zur Bekämpfung von Insektenschädlingen durch Heizräuchern des insektiziden Mittels nach einem der Ansprüche 1 bis 3.

## Revendications

1. Composition insecticide comprenant du (+)-1R,trans-2,2-diméthyl-3-(2,2-dichlorovinyl)cyclopropanecarboxylate de 2,3,5,6-tétrafluorobenzyle en tant qu'ingrédient insecticidement actif, et au moins un diester de l'acide phtalique ayant un nombre total d'atomes de carbone de 16 à 22.

2. Composition insecticide selon la revendication 1, comprenant du (+)-1R,trans-2,2-diméthyl-3-(2,2-dichlorovinyl)cyclopropanecarboxylate de 2,3,5,6-tétrafluorobenzyle, un diester de l'acide phtalique ayant un nombre total d'atomes de carbone de 16 à 22, et un support fibreux, qui est du (+)-1R,trans-2,2-diméthyl-3-(2,2-dichlorovinyl)cyclopropanecarboxylate de 2,3,5,6-tétrafluorobenzyle et le diester de l'acide phtalique supportés sur le support fibreux.

3. Composition insecticide selon la revendication 2, dans laquelle l'épaisseur dudit support fibreux est de 1 à 4 mm, le (+)-1R,trans-2,2-diméthyl-3-(2,2-dichlorovinyl)cyclopropanecarboxylate de 2,3,5,6-tétrafluorobenzyle est supporté sur ledit support fibreux en une quantité de 0,6 à 4,0 mg par cm² dudit support fibreux, et le diester de l'acide phtalique ayant un nombre total d'atomes de carbone de 16 à 22 est supporté sur ledit support fibreux en une quantité de 5 à 30 mg/cm² dudit support fibreux.

4. Procédé pour lutter contre des insectes nuisibles par fumigation chauffante de la composition insecticide selon l'une quelconque des revendications 1 à 3.
